(19) Europäisches Patentamt / European Patent Office / Office européen des brevets

(11) **EP 3 036 276 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(51) Int Cl.:
***C08J 5/10*** *(2006.01)*     ***B29C 45/14*** *(2006.01)*

(21) Anmeldenummer: **14752861.6**

(22) Anmeldetag: **18.08.2014**

(86) Internationale Anmeldenummer:
**PCT/EP2014/067589**

(87) Internationale Veröffentlichungsnummer:
**WO 2015/024913 (26.02.2015 Gazette 2015/08)**

(54) **VERFAHREN ZUR HERSTELLUNG EINES COMPOSITKUNSTSTOFFTEILS (CK)**

METHOD FOR PRODUCING A COMPOSITE PLASTIC COMPONENT

PROCÉDÉ DE FABRICATION D'UNE PIÈCE DE MATIÈRE PLASTIQUE COMPOSITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2013 EP 13181152**

(43) Veröffentlichungstag der Anmeldung:
**29.06.2016 Patentblatt 2016/26**

(73) Patentinhaber: **BASF SE**
**67056 Ludwigshafen am Rhein (DE)**

(72) Erfinder:
• **HABRAKEN, Gijsbrecht**
  **Budd Lake, New Jersey 07828 (US)**
• **PRUSTY, Manoranjan**
  **Kuruchikuppam,**
  **Puducherry 605012 (IN)**
• **RADTKE, Andreas**
  **68161 Mannheim (DE)**
• **KASALIWAL, Gaurav Ramanlal**
  **IN-400705 Thurbe (IN)**

(56) Entgegenhaltungen:
**EP-A2- 1 120 443**     **WO-A1-2012/058345**
**DE-A1-102010 062 538**     **US-A1- 2003 176 538**
**US-A1- 2012 027 983**

**Beschreibung**

Die vorliegende Erfindung betrifft ein Verfahren zur Herstellung eines Compositkunststoffteils (CK), bei dem ein erstes Fasermaterial (F1) mit einem Polyamidmatrixpolymer (PAM) unter Erhalt einer Matrixzusammensetzung (MZ) imprägniert wird, auf die eine Oberflächenzusammensetzung (OZ) aufgebracht wird, und eine erste Kunststoffkomponente (K1) erhalten wird. In einem zweiten Schritt wird an die erste Kunststoffkomponente (K1) eine zweite Kunststoffkomponente (K2) angeformt, wodurch das Compositkunststoffteil (CK) erhalten wird. Darüber hinaus betrifft die Erfindung das Compositkunststoffteil (CK), das nach dem erfindungsgemäßen Verfahren erhältlich ist. Ein weiterer Gegenstand der vorliegenden Erfindung ist die Verwendung von Polyethylenimin (PEI) zur Verbesserung der Imprägnierung des ersten Fasermaterials (F1) mit dem Polyamidmatrixpolymer (PAM). Faserverstärkte Kunststoffe haben sich seit einigen Jahren als Werkstoffe etabliert, die in vielen Anwendungsbereichen als Ersatz für Metallteile eingesetzt werden. Faserverstärkte flächige Kunststoffe werden daher auch als Organobleche bezeichnet. Durch den Einsatz von faserverstärkten Kunststoffen sollen das Gewicht der eingesetzten Werkstoffe und die Herstellungskosten der Werkstoffe reduziert werden. In faserverstärkten Kunststoffteilen wird üblicherweise eine Glas-, Kohlenstoff- oder Aramidfaser in Form eines Geleges oder eines Gewebes von einem Polymer umschlossen. Die so erhaltenen faserverstärkten Kunststoffteile sind kostengünstig herstellbar, sind gegenüber vergleichbaren Metallteilen leicht und zeichnen sich durch gute mechanische Eigenschaften aus.

Für die ersten faserverstärkten Kunststoffteile wurden als Polymerkomponenten duroplastische Polymere eingesetzt. Um eine größere Gestaltungsfreiheit hinsichtlich der Verarbeitung und Weiterverarbeitung sowie der mit faserverstärkten Kunststoffen herstellbaren Formen zu erreichen, wurden faserverstärkte Kunststoffe entwickelt, die Thermoplasten als Polymerkomponente enthalten.

Um die Gestaltungsfreiheit und die konstruktiven Möglichkeiten weiter zu erhöhen, können faserverstärkte Kunststoffe durch Schweißen und Umspritzen weiter verarbeitet werden. Das Schweißen und Umspritzen von endlosfaserverstärkten flächigen Kunststoffteilen ist beispielsweise in Marco Wacker et.al., "Schweißen und Umspritzen von Organoblechen", KU-Kunststoffe, Karl Hanser Verlag München, Jahrgang 92 (2002), 6 beschrieben. Durch die dort beschriebenen Verfahren zum Hinter- beziehungsweise Umspritzen können Funktionselemente an die faserverstärkten flächigen Kunststoffteile angebracht werden. Hierzu wird der faserverstärkte flächige Kunststoff vor dem Einlegen in das Formwerkzeug vorgeheizt und anschließend mit einem zweiten Polymer umspritzt.

Um eine gute Verbindung zwischen dem ersten Kunststoffteil und dem zweiten Polymer, das in das Formwerkzeug eingespritzt wird, zu erzielen, ist es wie vorstehend beschrieben, notwendig, das erste Kunststoffelement vorzuwärmen. Für das Vorwärmen können beispielsweise Infrarotstrahler oder Öfen eingesetzt werden. Durch das Vorwärmen wird das erste Kunststoffelement erweicht und gegebenenfalls an der Oberfläche angeschmolzen. Die Erwärmung kann dabei außerhalb des Formwerkzeugs erfolgen. Es ist auch möglich, die Erwärmung direkt im Formwerkzeug durchzuführen. Hierdurch können Verformungen des erweichten ersten Kunststoffelements vermieden werden.

Um eine ausreichend große Festigkeit der Verbindung (Adhäsion) zwischen dem ersten Kunststoffelement und dem zweiten Kunststoffelement zu erreichen, ist ein ausreichend tiefes Anschmelzen der Oberfläche des ersten Kunststoffelements notwendig, damit eine stabile Schweißverbindung entsteht. Aufgrund der bevorzugten Erwärmung des ersten Kunststoffelements im Formwerkzeug ist eine hohe Taktzeit erforderlich, bis das fertige Formteil aus dem Formwerkzeug entnommen werden kann, da eine Entnahme in der Regel erst dann möglich ist, wenn das Polymer des ersten Kunststoffelements sowie die Polymere, die als Komponente des zweiten Kunststoffelements in das Formteil eingespritzt werden, soweit erstarrt sind, dass das Formteil formstabil ist. Hierzu wird das Formwerkzeug vor der Entnahme des fertigen Formteils üblicherweise gekühlt.

Um eine ausreichende Adhäsion zwischen dem ersten und dem zweiten Kunststoffelement und damit eine gute Stabilität des resultierenden Compositkunststoffteils (CK) zu erreichen, sind im Stand der Technik verschiedene Methoden beschrieben.

Die US 2008/0176090 A1 beschreibt ein Compositkunststoffteil, das eine erste und eine zweite Kunststoffkomponente enthält. Zur Verbesserung der Adhäsion wird zwischen der ersten und der zweiten Kunststoffkomponente eine sogenannte Haftvermittlerschicht eingesetzt. Die Haftvermittlerschicht enthält dabei Ethylenvinylalkoholcopolymere, Ethylenvinylacetatcopolymere oder Ionomere, wie beispielsweise ethylenbasierte Polymere, die Carboxylgruppen aufweisen und in denen die Carboxylgruppen mit Metallionen neutralisiert sind. Die in der US 2008/0176090 beschriebenen Compositkunststoffteile weisen bereits gute Adhäsion auf, ihre Herstellung ist aufgrund der Notwendigkeit einer zusätzlichen Haftvermittlerschicht jedoch aufwändig.

Die US 2012/0027983 beschreibt Polyamidcompositkunststoffteile, bei denen der Einsatz einer separaten Haftvermittlerschicht nicht zwingend erforderlich ist. Die Compositkunststoffteile weisen ebenfalls eine erste und eine zweite Kunststoffkomponente auf, wobei mindestens eine der Kunststoffkomponenten 1 bis 15 Gew.-% eines funktionalisierten Polyolefins zur Verbesserung der Adhäsion zwischen der ersten und der zweiten Kunststoffkomponente enthält. Als funktionalisierte Polyolefine werden beispielsweise Polyolefine eingesetzt, die mit Maleinsäureanhydrid gepfropft sind.

In Compositkunststoffteilen wird als erstes Kunststoffelement häufig ein faserverstärktes Kunststoffelement eingesetzt. Hierzu wird beispielsweise eine Fasermatte mit einem Kunststoff imprägniert. Zur Imprägnierung wird der Kunststoff aufgeschmolzen, um die Fasermatte möglichst vollständig zu umschließen. Um eine gute Stabilität des Compositkunststoffteils zu erreichen, ist es hierbei notwendig, dass die Fasermatte vollständig von dem Kunststoff durchdrungen wird. Die einzelnen Fasern der Fasermatte sollen dabei möglichst vollständig von dem geschmolzenen Kunststoff ummantelt werden. Bei dem im Stand der Technik beschriebenen Verfahren muss hierzu der Kunststoff auf hohe Temperaturen erhitzt werden, damit die Kunststoffschmelze eine ausreichend niedrige Viskosität erreicht, um eine vollständige Ummantelung der Fasermatte zu gewährleisten.

Eine vollständige Ummantelung der Fasermatte mit Kunststoff ist notwendig, um eine gute Stabilität des Compositkunststoffteils zu gewährleisten, nachdem das zweite Kunststoffelement angeformt wurde.

Die im Stand der Technik beschriebenen hohen Temperaturen zur Imprägnierung der Fasermatte sind nachteilig, da durch die hohen Temperaturen die Kunststoffschmelze thermisch stark belastet wird. Dies kann zum Abbau der Polymerketten in der Kunststoffschmelze führen. Darüber hinaus ist eine vollständige Ummantelung der einzelnen Fasern der Fasermatte bei den im Stand der Technik beschriebenen Verfahren nicht immer sicher gewährleistet.

Der vorliegenden Erfindung liegt somit die Aufgabe zugrunde, ein Verfahren zur Herstellung eines Compositkunststoffteils bereitzustellen, das die vollständige Ummantelung der eingesetzten Fasermaterialien sicher gewährleistet. Das Verfahren soll darüber hinaus eine Ummantelung der einzelnen Faser der Fasermaterialien auch bei niedrigeren Temperaturen sicher gewährleisten. Darüber hinaus soll das Compositkunststoffteil eine verbesserte oder zumindest gleichwertige Adhäsion zwischen den beiden Kunststoffelementen aufweisen. Das Compositkunststoffteil soll darüber hinaus auch gegenüber thermischen Belastungen stabil sein. Das nach dem Verfahren erhältliche Compositkunststoffteil soll eine verbesserte oder zumindest gleichwertige Wärmealterungsbeständigkeit (WAB) aufweisen. Das Verfahren soll einfach und kostengünstig durchführbar sein. Das durch das Verfahren erhältliche Compositkunststoffteil soll gute mechanische Eigenschaften aufweisen. Insbesondere eine gute Adhäsion zwischen der ersten und der zweiten Kunststoffkomponente sowie eine verbesserte Wärmealterungsbeständigkeit (WAB).

Gelöst wird die Aufgabe durch ein Verfahren zur Herstellung eines Compositkunststoffteils (CK) umfassend die folgenden Schritte:

a) Herstellung einer ersten Kunststoffkomponente (K1) umfassend die folgenden Schritte:

ia) Imprägnieren eines ersten Fasermaterials (F1) mit einem Polyamidmatrixpolymer (PAM) unter Erhalt einer Matrixzusammensetzung (MZ) und

ib) Aufbringen einer Oberflächenzusammensetzung (OZ), die ein Polyamidoberflächenpolymer (PAO) enthält, auf die Matrixzusammensetzung (MZ) unter Erhalt der ersten Kunststoffkomponente (K1), wobei die Oberflächenzusammensetzung (OZ) eine Oberfläche der ersten Kunststoffkomponente (K1) bildet,

b) Anformen einer zweiten Kunststoffkomponente (K2), die ein Polyamidanformungspolymer (PAA) enthält, an die Oberfläche von (K1),
wobei
die Matrixzusammensetzung (MZ) ein Polyethylenimin (PEI) enthält.

Es wurde überraschend festgestellt, dass mit dem erfindungsgemäßen Verfahren eine vollständige Ummantelung des ersten Fasermaterials (F1) durch Imprägnieren sicher gewährleistet ist. Die Imprägnierung kann gemäß dem erfindungsgemäßen Verfahren bei niedrigeren Temperaturen durchgeführt werden. Das nach dem erfindungsgemäßen Verfahren hergestellte Compositkunststoffteil (CK) weist eine verbesserte Adhäsion zwischen der ersten Kunststoffkomponente (K1) und der zweiten Kunststoffkomponente (K2) auf. Das nach dem erfindungsgemäßen Verfahren erhältliche Compositkunststoffteil (CK) weist somit gute mechanische Eigenschaften auf, insbesondere eine sehr gute Adhäsion zwischen der ersten Kunststoffkomponente (K1) und der zweiten Kunststoffkomponente (K2). Die Compositkunststoffteile (CK) sind nach dem erfindungsgemäßen Verfahren kostengünstiger herstellbar, da zur Herstellung niedrigere Temperaturen aufgewendet werden müssen. Darüber hinaus zeigt das nach dem erfindungsgemäßen Verfahren erhältliche Compositkunststoffteil (CK) eine verbesserte Wärmealterungsstabilität (WAB) im Vergleich zu Compositkunststoffteilen, die nach den im Stand der Technik beschriebenen Verfahren hergestellt werden.

Die nachfolgenden Ausführungen und Bevorzugungen im Hinblick auf das Verfahren zur Herstellung eines Compositkunststoffteils (CK) gelten für das Compositkunststoffteil (CK) sowie die Verwendung von Polyethylenimin (PEI) zur Verbesserung der Imprägnierung des ersten Fasermaterials (F1) bei der Herstellung eines Compositkunststoffteils (CK) entsprechend.

**Erste Kunststoffkomponente (K1)**

Die erste Kunststoffkomponente (K1) wird nachfolgend auch verkürzt als K1 bezeichnet. Die Matrixzusammensetzung (MZ) wird nachfolgend auch verkürzt als MZ bezeichnet. Das Polyamidmatrixpolymer (PAM) wird nachfolgend auch verkürzt als PAM bezeichnet. Das erste Fasermaterial (F1) wird nachfolgend auch verkürzt als F1 bezeichnet. Die Oberflächenzusammensetzung (OZ) wird nachfolgend auch verkürzt als OZ bezeichnet. Das Polyamidoberflächenpolymer (PAO) wird nachfolgend auch verkürzt als PAO bezeichnet.

Matrixzusammensetzung (MZ)

Die Matrixzusammensetzung (MZ) enthält ein Polyamidmatrixpolymer (PAM) und mindestens ein erstes Fasermaterial (F1) zur Verstärkung. Unter dem Begriff "ein Polyamidmatrixpolymer (PAM)" wird vorliegend sowohl genau ein Polyamidmatrixpolymer (PAM) als auch Mischungen aus zwei oder mehreren Polyamidmatrixpolymeren (PAM) verstanden. Gleiches gilt für den Begriff "mindestens ein erstes Fasermaterial (F1)". Hierunter wird erfindungsgemäß sowohl genau ein erstes Fasermaterial (F1) als auch Mischungen aus zwei oder mehreren Fasermaterialien (F1) verstanden.

*Polyamidmatrixpolymer (PAM)*

Als Polyamidmatrixpolymer (PAM) kann, wie vorstehend ausgeführt, genau ein Polyamidmatrixpolymer (PAM) eingesetzt werden. Es ist auch möglich, Mischungen aus zwei oder mehr Polyamidmatrixpolymeren (PAM) einzusetzen. Geeignete Polyamidmatrixpolymere (PAM) weisen im Allgemeinen eine Viskositätszahl von 90 bis 350, vorzugsweise von 110 bis 240 ml/g auf. Die Bestimmung der Viskositätszahl erfolgt dabei aus einer 0,5-gew.-%igen Lösung des Polyamidmatrixpolymers (PAM) in 96-gew.-%iger Schwefelsäure bei 25 °C gemäß ISO 307.

Als Polyamidmatrixpolymere (PAM) sind halbkristalline oder amorphe Polyamide bevorzugt. Geeignete Polyamidmatrixpolymere (PAM) weisen ein gewichtsmittleres Molekulargewicht ($M_W$) im Bereich von 500 bis 2 000 000 g/mol auf. Das mittlere Molekulargewicht ($M_w$) wird bestimmt mittels Lichtstreuung gemäß AMST D4001.

Als Polyamidmatrixpolymere (PAM) sind beispielsweise Polyamide geeignet, die sich von Lactamen mit 7 bis 13 Ringgliedern ableiten. Als Polyamidmatrixpolymer (PAM) sind weiterhin Polyamide geeignet, die durch Umsetzung von Dicarbonsäuren mit Diaminen erhalten werden.

Als Polyamide, die sich von Lactamen ableiten, seien beispielhaft Polyamide erwähnt, die sich von Polycaprolactam, Polycapryllactam und/oder Polylaurinlactam ableiten.

Für den Fall, dass Polyamide eingesetzt werden, die aus Dicarbonsäuren und Diaminen erhältlich sind, können als Dicarbonsäurealkane Dicarbonsäuren mit 6 bis 36 Kohlenstoffatomen, bevorzugt 6 bis 12 Kohlenstoffatomen, eingesetzt werden. Darüber hinaus sind aromatische Dicarbonsäuren geeignet.

Beispielhaft seien hier Adipinsäure, Azelainsäure, Sebacinsäure, Dodecandicarbonsäure sowie Terephthalsäure und/oder Isophtalsäure als Dicarbonsäuren genannt.

Als Diamine eigenen sich beispielsweise Alkandiamine mit 4 bis 36 Kohlenstoffatomen, insbesondere Alkandiamine mit 6 bis 12 Kohlenstoffatomen sowie aromatische Diamine, wie beispielsweise m-Xylylendiamin, Di-(4-aminophenyl)methan, Di-(4-aminocyclohexyl)-methan, 2,2-Di-(4-aminophenyl)-propan, 2,2-Di-(4-aminocyclohexyl)-propan oder 1,5-diamino-2-methyl-pentan.

Bevorzugte als Polyamidmatrixpolymere (PAM) sind Polyhexamethylenadipinsäureamid, Polyhexamethylensebacinsäureamid und Polycaprolactam sowie Copolyamid 6/66 geeignet, insbesondere mit einem Anteil von 5 bis 95 Gew.-% an Caprolactam-Einheiten.

Weiterhin sind als PAM Polyamide geeignet, die durch Copolymerisation zweier oder mehrerer der vorstehend und nachstehend genannten Monomeren erhältlich sind, oder Mischungen mehrerer Polyamide, wobei das Mischungsverhältnis beliebig ist. Besonders bevorzugt sind Mischungen von Polyamid 66 mit anderen Polyamiden, insbesondere Copolyamid 6/66.

Weiterhin haben sich als PAM teilaromatische Copolyamide wie PA 6/6T und PA 66/6T als besonders vorteilhaft erwiesen, deren Triamingehalt weniger als 0,5, vorzugsweise weniger als 0,3 Gew.-% beträgt.

Die Herstellung solcher teilaromatischer Copolyamide mit niedrigem Triamingehalt kann nach den in den EP-A 129 195 und 129 196 beschriebenen Verfahren erfolgen.

Die nachfolgende nicht abschließende Aufstellung enthält die vorstehend genannten, sowie weitere Polyamide, die als PAM geeignet sind sowie und die enthaltenen Monomere.

AB-Polymere:

PA 4      Pyrrolidon

(fortgesetzt)

| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

AA/BB-Polymere:

| PA 46 | Tetramethylendiamin, Adipinsäure |
| PA 66 | Hexamethylendiamin, Adipinsäure |
| PA 69 | Hexamethlyendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylyendiamin, Adipinsäure |
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Gegenstand der vorliegenden Erfindung ist somit auch ein Compositkunststoffteil (CK) in dem das Polyamidmatrixpolymer (PAM) mindestens ein Polyamid ist, ausgewählt aus der Gruppe bestehend aus PA 4, PA 6, PA 7, PA 8, PA 9, PA 11, PA 12, PA 46, PA 66, PA 69, PA 610, PA 612, PA 613, PA 1212, PA1313, PA 6T, PA MXD6, PA 6I, PA 6-3-T, PA 6/6T, PA 6/66, PA 6/12, PA 66/6/610, PA 6I/6T, PA PACM 12, PA 6I/6T/PACM, PA 12/MACMI, PA 12/MACMT, PA PDA-T und Copolyamide aus zwei oder mehreren der vorstehend genannten Polyamide.

Bevorzugt ist das Polyamidmatrixpolymer (PAM) ein Polyamid ausgewählt aus der Gruppe bestehend aus PA6, PA66 und Copolyamiden aus PA6 und PA66.

Bevorzugt ist das Polyamidmatrixpolymer (PAM) PA6.

In einer weiteren bevorzugten Ausführungsform ist das Polyamidmatrixpolymer (PAM) PA66.

In einer weiteren bevorzugten Ausführungsform ist das Polyamidmatrixpolymer (PAM) PA6/66.

Das PAM kann darüber hinaus weitere übliche Additive enthalten, wie beispielsweise Schlagzähmodifizierer, Schmiermittel, UV-Stabilisatoren und Prozessstabilisatoren.

*Erstes Fasermaterial (F1)*

Als geeignete Materialien für das erste Fasermaterial (F1) seien beispielhaft Kohlenstofffasern, Glasfasern, Aramidfasern, Kaliumtitanatfasern, Borfasern, mineralische Fasern (wie beispielsweise Basaltfasern) und metallische Fasern (wie beispielsweise Stahlfasern oder Kupferfasern) genannt.

Als erstes Fasermaterial (F1) ist ein Endlosfasermaterial bevorzugt.

Gegenstand der vorliegenden Erfindung ist somit auch ein Verfahren bei dem das erste Fasermaterial (F1) ein Endlosfasermaterial ist.

Die Begriffe "Endlosfasermaterial" und "Endlosfaser" werden nachfolgend synonym gebraucht. Unter einer Endlosfaser wird vorliegend ein linienförmiges Gebilde gemäß DIN 60 000 von praktisch unbegrenzter Länge verstanden, das sich textil verarbeiten lässt. Eine Endlosfaser wird auch als Filament bezeichnet. Der Begriff Filament wird in der Textiltechnik verwendet. Unter Filament (Endlosfaser) wird demnach eine auf chemischem oder technischem Weg erzeugte, praktisch endlose, Faser gemäß DIN 60 001 T 2 (Dezember 1974) verstanden.

Für den Fall, dass als erstes Fasermaterial (F1) ein Endlosfasermaterial eingesetzt wird, sind Endlosglasfasern bevorzugt. Die Endlosfasern können dabei in Form eines Gestrickes, eines Gewirkes oder eines Gewebes eingesetzt werden. Es ist auch möglich, uni-direktionale Endlosfasern einzusetzen. Solche einfädigen Endlosfasern werden auch als Monofil bezeichnet. Für den Fall, dass uni-direktionale Endlosfasern eingesetzt werden, wird eine Vielzahl parallel zueinander eingesetzter Endlosglasfasern eingesetzt. Bevorzugt werden in diesem Fall uni-direktionale Lagen parallel zueinander ausgerichteter Endlosfasern eingesetzt.

Darüber hinaus ist es möglich, bi-direktionale oder mehr-direktionale Lagen von Endlosfasern einzusetzen. In diesem Fall weist das erste Fasermaterial (F1) eine elementare uni-direktionale Schicht (UD-Schicht) auf. Oberhalb und/oder unterhalb der elementaren UD-Schicht ist eine weitere UD-Schicht angeordnet, in der die Richtung der Endlosfasern um beispielsweise 90° zur Faserrichtung der elementaren UD-Schicht verdreht ist. Bei mehr-direktionalen Schichten enthält das erste Fasermaterial (F1) mehrere Schichten (beispielsweise drei, vier, fünf oder sechs Schichten) bei denen die Richtungen der Faser der jeweiligen Schichten jeweils um beispielsweise 90° zueinander verdreht sind. Der Winkel, mit dem die einzelnen uni-direktionalen Schichten bei bi- beziehungsweise mehr-direktionalen Schichten zueinander verdreht sind, kann in weiten Bereichen variieren, beispielsweise im Bereich von $\pm$ 10° bis $\pm$ 90°.

Für den Fall, dass als erstes Fasermaterial (F1) die bevorzugten Endlosfasern eingesetzt werden, können die Endlosfasern jeweils einzeln eingesetzt werden. Es ist auch möglich, die Endlosfasern jeweils einzeln zu verweben oder einzelne Endlosfaserbündel miteinander zu verweben. Die Endlosfasern können darüber hinaus in Form eines Vlieses oder eines Filzes eingesetzt werden. Geeignete Endlosfasermaterialien sind dem Fachmann bekannt. Besonders bevorzugte Endlosfasermaterialien sind Glasfasern und Kohlenstofffasern. Insbesondere bevorzugt sind Endlosglasfasern und Endloskohlenstofffasern mit einem Faserdurchmesser im Bereich von 9 bis 34 $\mu$m.

Die Matrixzusammensetzung (MZ) kann neben dem Polyamidmatrixpolymer (PAM) und dem ersten Fasermaterial (F1) weitere übliche Additive enthalten. Geeignete Additive sind beispielsweise UV-Stabilisatoren, Schmiermittel, Nukleirungsmittel, Farbstoffe, Weichmacher. Geeignete weiter Additive sind beispielsweise in der WO 2010/076145 beschrieben.

Auch die Oberflächenzusammensetzung (OZ) sowie die zweite Kunststoffkomponente (K2) können weitere übliche Additive enthalten, wie sie beispielsweise in der WO 2010/076145 beschrieben sind.

Die weiteren Additive sind im Allgemeinen in Mengen von 0 bis 5 Gew-%, bezogen auf das Gesamtgewicht des Polyamidmatrixmaterials (PAM) in der Matrixzusammensetzung (MZ), enthalten, bzw. bezogen auf das Gesamtgewicht des Polyamidoberflächenpolymers (PAO) in der Oberflächenzusammensetzung (OZ) oder bezogen auf das Gesamtgewicht des Polyamidanformungspolymers (PAA) der zweiten Kunststoffkomponente (K2).

Die Matrixzusammensetzung (MZ) enthält im Allgemeinen 0,01 bis 5 Gew.-% Polyethylenimin (PEI), bezogen auf das Gesamtgewicht der Matrixzusammensetzung (MZ).

Die Oberflächenzusammensetzung (OZ) und die zweite Kunststoffkomponente (K2) können ebenfalls ein Polyethylenimin (PEI) enthalten.

Gegenstand der vorliegenden Erfindung ist somit auch ein Compositkunststoffteil (CK), das in der Oberflächenzusammensetzung (OZ) in der Matrixzusammensetzung (MZ) und in der zweiten Kunststoffkomponente (K2) ein Polyethylenimin (PEI) enthält.

In einer weiteren Ausführungsform enthalten OZ, MZ und K2 das gleiche Polyethylenimin (PEI).

Um die Imprägnierung des ersten Fasermaterials (F1) in Verfahrensschritt ia) zu erleichtern und eine vollständige Ummantelung der Fasern auch bei niedrigeren Temperaturen sicher zu gewährleisten, ist es jedoch ausreichend, wenn nur die Matrixzusammensetzung (MZ) ein Polyethylenimin (PEI) enthält.

Gegenstand der vorliegenden Erfindung ist somit auch ein Compositkunststoffteil (CK) welches nur in der Matrixzusammensetzung (MZ) ein Polyethylenimin (PEI) enthält.

Die Matrixzusammensetzung (MZ) enthält im Allgemeinen

10 bis 99,94 Gew.-% eines Polyamidmatrixpolymers (PAM)

0,01 bis < 2 Gew-% eines Polyethylenimins (PEI),

0,01 bis 80 Gew.-% eines ersten Fasermaterials (F1) und

0 bis 5 Gew.-% weiterer Additive,

wobei die Gew.-%-Angaben jeweils auf das Gesamtgewicht von MZ bezogen sind.

Oberflächenzusammensetzung (OZ)

Die Oberflächenzusammensetzung (OZ) enthält ein Polyamidoberflächenpolymer (PAO) und bildet eine Oberfläche der ersten Kunststoffkomponente (K1). Unter dem Begriff "eine Oberfläche" werden vorliegend sowohl genau eine Oberfläche als auch zwei oder mehrere Oberflächen verstanden. Unter dem Begriff "ein Polyamidoberflächenpolymer (PAO)" wird vorliegend sowohl genau ein PAO als auch Mischungen ans zwei oder mehreren PAO's verstanden.

Die Oberflächenzusammensetzung (OZ) kann dabei lokal an einer vorgegebenen Position die Oberfläche der Kunststoffkomponente von (K1) ausbilden. Es ist auch möglich, dass die Oberflächenzusammensetzung (OZ) die Matrixzusammensetzung (MZ) vollständig umschließt. Für den bevorzugten Fall eines flächigen Compositkunststoffteils (CK) kann die Oberflächenzusammensetzung (OZ) eine Oberfläche auf der Oberseite der Matrixzusammensetzung (MZ) und/oder auf der Unterseite der Matrixzusammensetzung (MZ) ausbilden.

Für den Fall dass die Oberflächenzusammensetzung (OZ) nur auf der Oberseite oder nur auf der Unterseite der Matrixzusammensetzung (MZ) eine Oberfläche ausbildet, bildet die Oberflächenzusammensetzung (OZ) 10 % bis 50 % der Gesamtoberfläche der ersten Kunststoffkomponente (K1), bevorzugt 30 bis 50 % und besonders bevorzugt 40 bis 50 % der Gesamtoberfläche der ersten Kunststoffkomponente (K1).

Für den Fall dass die Oberflächenzusammensetzung (OZ) auf der Oberseite und der Unterseite der Matrixzusammensetzung (MZ) eine Oberfläche ausbildet, bildet die Oberflächenzusammensetzung (OZ) größer 50 % bis 100 % der Gesamtoberfläche der ersten Kunststoffkomponente (K1), bevorzugt 80 bis 100 % und besonders bevorzugt 90 bis 100% der Gesamtoberfläche der ersten Kunststoffkomponente (K1).

Als Polyamidoberflächenpolymer (PAO) können Polyamide eingesetzt werden, wie sie vorstehend zum Polyamidmatrixpolymer (PAM) beschrieben wurden. Für das Polyamidoberflächenpolymer (PAO) gelten die vorstehenden Ausführungen und Bevorzugungen zum Polyamidmatrixpolymer (PAM) somit entsprechend.

Das Polyamidoberflächenpolymer (PAO) enthält im Allgemeinen kein Fasermaterial (F1). Das Polyamidoberflächenpolymer (PAO) kann gegebenenfalls weitere Additive enthalten, wie sie vorstehend zum Polyamidmatrixpolymer (PAM) beschrieben wurden. In einer bevorzugten Ausführungsform enthält die Oberflächenzusammensetzung (OZ) kein Fasermaterial (MZ).

In einer bevorzugten Ausführungsform enthält die Oberflächenzusammensetzung (OZ) als Polyamidoberflächenpolymer (PAO) das gleiche Polyamidpolymer wie das Polyamidmatrixpolymer (PAM). In einer bevorzugten Ausführungsform sind somit Polyamidmatrixpolymer (PAM) und das Polyamidoberflächenpolymer (PAO) identisch.

Es ist jedoch auch möglich, als Polyamidoberflächenpolymer (PAO) ein Polyamidpolymer einzusetzen, das vom Polyamidmatrixpolymer (PAM) verschieden ist.

In einer Ausführungsform enthält die Oberflächenzusammensetzung (OZ) ein Polyethylenimin (PEI).

Herstellung der ersten Kunststoffkomponente (K1)

*Verfahrensschritt ia) Imprägnieren des ersten Fasermaterials (F1)*

Für den Fall, das als erstes Fasermaterial (F1) ein Endlosfasermaterial in Form einer Matte, eines Vlieses, eines Filzes, eines Gewebes, eines Gestrickes oder eines Gewirkes eingesetzt wird, wird zur Herstellung der ersten Kunststoffkomponente (K1) das erste Fasermaterial (F1) gemäß Verfahrensschritt ia) im Allgemeinen mit dem Polyamidmatrixpolymer (PAM) imprägniert.

Die unterschiedlichen Verfahren zur Herstellung der Matrixzusammensetzung (MZ) bzw. der ersten Kunststoffkomponente (K1) sind dem Fachmann prinzipiell bekannt und beispielsweise in R. Stolze, Kunststoffe 78, 1988, Seiten 126 bis 131 sowie in M. Wacker, G.W. Ehrenstein, C. Obermann, Kunststoffe 92, 2002, Seiten 78 bis 81, beschrieben.

Zur Herstellung der Matrixzusammensetzung (MZ) wird in Verfahrensschritt ia) das erste Fasermaterial (F1) mit dem Polyamidmatrixpolymer (PAM) imprägniert. Dies kann beispielsweise dadurch erfolgen, dass das Polyamidmatrixpolymer (PAM) in Form einer Schmelze mit dem ersten Fasermaterial (F1) in Kontakt gebracht wird. Eine weitere Möglichkeit zur Herstellung der Matrixzusammensetzung (MZ) ist die Pulverpreimprägnierung oder das Laminieren des ersten Fasermaterials (F1) mit Folien des Polyamidmatrixpolymers (PAM) und anschließendem Schmelzen und Verpressen der Folie/n beziehungsweise des aufgetragenen Pulvers, um die Matrixzusammensetzung (MZ) herzustellen.

Es ist auch möglich, einzelne Endlosfasern oder Garne aus Endlosfasern mit dem Polyamidmatrixpolymer (PAM) zu ummanteln, nachfolgend die ummantelten Endlosfasern zu verweben und nachfolgend das Gewebe zu erhitzen, um das Polyamidmatrixpolymer (PAM) zu verschmelzen und die Matrixzusammensetzung (MZ) zu erhalten.

Erfindungsgemäß ist es entscheidend, dass die Matrixzusammensetzung (MZ) ein Polyethylenimin (PEI) enthält, um die Imprägnierung des ersten Fasermaterials (F1) zu erleichtern und auch bei niedrigeren Temperaturen die vollständige Ummantelung der Fasern des ersten Fasermaterials (F1) sicher zu gewährleisten.

Das Polyethylenimin (PEI) kann dabei beispielsweise als Pulver auf das erste Fasermaterial (F1) aufgestreut werden. Das Polyethylenimin (PEI) wird bevorzugt dem Polyamidmatrixpolymer (PAM) zugesetzt. Hierzu werden übliche Mischvorrichtungen, wie beispielsweise Extruder, eingesetzt. Es ist auch möglich, das Polyethylenimin (PEI) dem Polyamidmatrixpolymer (PAM) erst bei der Herstellung der Matrixzusammensetzung (MZ) zuzugeben.

Zur Imprägnierung des ersten Fasermaterials (F1) gemäß Verfahrensschritt ia) wird das Polyamidmatrixpolymer (PAM) im Allgemeinen erwärmt, um die Viskosität des Polyamidmatrixpolymers (PAM) soweit zu erniedrigen, dass eine vollständige Ummantelung der Fasern des ersten Fasermaterials (F1) sicher gewährleistet ist. Im Allgemeinen wird das Polyamidmatrixpolymer (PAM) hierbei zusammen mit dem ersten Fasermaterial (F1) verpresst.

Durch den Einsatz von einem Polyethylenimin (PEI) in der Matrixzusammensetzung (MZ) wird die Viskosität des Polyamidmatrixpolymers (PAM) erniedrigt. Hierdurch wird es möglich, beim Erwärmen des Polyamidmatrixpolymers (PAM) die Viskosität bereits bei, im Vergleich zum Stand der Technik, niedrigeren Temperaturen soweit abzusenken, dass eine vollständige Ummantelung der Fasern des ersten Fasermaterials (F1) sicher gewährleistet ist.

Durch Einsatz von Poylethylenimin (PEI) wird somit eine Absenkung (Erniedrigung) der Viskosität des Polyamidmatrixpolymers (PAM) erreicht. Die zero-shear rate Viskosität des Polyamidmatrixpolymers (PAM) wird durch die Verwendung von Polyethylenimin (PEI) um mindestens 10 %, bevorzugt mindestens 50 % abgesenkt, bezogen auf die Viskosität des Polyamidmatrixpolymers (PAM) ohne Polyethylenimin (PEI).

Als Kenngröße für die zero-shear rate Viskosität wird hierzu die Viskositätszahl herangezogen, wie sie vorstehend zum Polyamidmatrixpolymer (PAM) beschrieben wurde. Die Absenkung der zero-shear rate Viskosität liegt im Allgemeinen im Bereich von 10 bis 50 %, bevorzugt im Bereich von 20 bis 40%, bezogen auf die Viskosität des Polyamidmatrixpolymers (PAM) ohne Polyethylenimin (PEI).

Weiterhin Gegenstand der vorliegenden Erfindung ist somit auch das Compositkunststoffteil (CK), das nach dem erfindungsgemäßen Verfahren erhältlich ist.

Weiterhin Gegenstand der vorliegenden Erfindung ist somit auch die Verwendung Verwendung von Polyethylenimin (PEI) zur Verbesserung der Imprägnierung eines ersten Fasermaterials (F1) mit einem Polyamidmatrixpolymer (PAM) in einem Verfahren zur Herstellung eines Compositkunststoffteils (CK), umfassend die folgenden Schritte:

a) Herstellung einer ersten Kunststoffkomponente (K1) umfassend die folgenden Schritte:

ia) Imprägnieren eines ersten Fasermaterials (F1) mit einem Polyamidmatrixpolymer (PAM) unter Erhalt einer Matrixzusammensetzung (MZ) und

ib) Aufbringen einer Oberflächenzusammensetzung (OZ), die ein Polyamidoberlächenpolymer (PAO) enthält, auf die Matrixzusammensetzung (MZ) unter Erhalt der ersten Kunststoffkomponente (K1), wobei die Oberflächenzusammensetzung (OZ) eine Oberfläche der ersten Kunststoffkomponente (K1) bildet,

b) Anformen einer zweiten Kunststoffkomponente (K2), die ein Polyamidanformungspolymer (PAA) enthält, an die Oberfläche von (K1),
wobei
die Matrixzusammensetzung (MZ) ein Polyethylenimin (PEI) enthält.

Im Allgemeinen wird das Polyamidmatrixpolymer (PAM) in Verfahrensschritt ia) auf Temperaturen im Bereich von 100 bis 360 °C, bevorzugt im Bereich von 150 bis 310 °C, besonders bevorzugt auf 180 bis 300°C und insbesondere im Bereich von 190 bis 290 °C, erwärmt.

Gegenstand der vorliegenden Erfindung ist auch ein Verfahren, bei dem das Polyamidmatrixpolymer (PAM) in Verfahrensschritt ia) auf Temperaturen im Bereich von 40 bis 210 °C erwärmt wird.

Verfahrensschritt *ib) Aufbringen der Oberflächenzusammensetzung (OZ)*

In Verfahrensschritt ib) wird die Oberflächenzusammensetzung (OZ) auf die Matrixzusammensetzung (MZ) aufgebracht. Hierdurch wird die Kunststoffkomponente (K1) erhalten, wobei die Oberflächenzusammensetzung (OZ) eine Oberfläche der ersten Kunststoffkomponente (K1) ausbildet.

Das Aufbringen der Oberflächenzusammensetzung (OZ) auf die Matrixzusammensetzung kann hierbei ebenfalls durch dem Fachmann bekannte Verfahren erfolgen. Es ist möglich, die Oberflächenzusammensetzung (OZ) als Pulver auf die Matrixzusammensetzung (MZ) aufzustreuen und nachfolgend, im Allgemeinen unter Druck, zu erwärmen. Bevorzugt wird die Oberflächenzusammensetzung (OZ) auf die Matrixzusammensetzung (MZ) in Form einer Folie auflaminiert.

Im Allgemeinen wird die Oberflächenzusammensetzung (OZ) in Verfahrensschritt ib) auf Temperaturen im Bereich von 100 bis 360 °C, bevorzugt im Bereich von 150 bis 310 °C, besonders bevorzugt auf 180 bis 300°C und insbesondere im Bereich von 190 bis 290 °C, erwärmt.

Gegenstand der vorliegenden Erfindung ist auch ein Verfahren, bei dem die Oberflächenzusammensetzung (OZ) in Verfahrensschritt ib) auf Temperaturen im Bereich von 40 bis 210 °C erwärmt wird.

In einer bevorzugten Ausführungsform werden in Verfahrensschritt a) die Verfahrensschritte ia) und ib) gleichzeitig durchgeführt, so dass direkt die erste Kunststoffkomponente (K1) erhalten wird.

Gegenstand der vorliegenden Erfindung ist somit auch ein Verfahren, bei dem in Verfahrensschritt a) die Verfahrensschritte ia) und ib) gleichzeitig durchgeführt werden.

In einer Ausführungsform weist die Kunststoffkomponente (K1) einen schichtartigen Aufbau auf. Dieser Aufbau wird auch als Sandwichstruktur bezeichnet. Für den Fall einer Sandwichstruktur weist die Kunststoffkomponente (K1) eine Vielzahl von Schichten des ersten Fasermaterials (F1) auf. Unter Vielzahl werden vorliegend im Allgemeinen 2 bis 20 Schichten des ersten Fasermaterials (F1) verstanden. In der Sandwichstruktur befindet sich formal zwischen jeweils zwei benachbarten Schichten des ersten Fasermaterials (F1) mindestens eine Polymerschicht. Diese Polymerschichten werden dabei aus dem Polyamidmatrixpolymer (PAM) gebildet.

Für diese Ausführungsform gelten die allgemeinen Ausführungen und Bevorzugungen in Bezug auf K1, F1, PAM und PAO entsprechend. Für den Fall einer Sandwichstruktur kann diese 1 bis 20, bevorzugt 2 bis 10 und besonders bevorzugt 2 bis 6 Schichten des ersten Fasermaterials (F1) enthalten.

Die Herstellung einer solchen Sandwichstruktur ist dem Fachmann an sich bekannt und kann beispielsweise durch Laminieren erfolgen. Die Herstellung wird nachfolgend am Beispiel einer Sandwichstruktur beschrieben, die zwei Schichten des ersten Fasermaterials (F1) aufweist. Hierzu werden die Materialien in der nachfolgenden angegebenen Reihenfolge aufeinander gebracht und anschließend, bevorzugt unter Druck und Erwärmen, zusammengefügt:

Eine Folie aus PAO, eine Schicht aus F1, eine Folie aus PAM, eine Schicht aus F1 und eine Folie aus PAO.

Das Zusammenfügen kann beispielsweise unter Erwärmen und Druck erfolgen. Hierzu können die vorstehend genannten Materialien beispielsweise einer beheizbaren Rollpresse zugeführt werden, in der das Zusammenfügen erfolgt.

Durch das Erwärmen beim Zusammenfügen schmilzt das als mittlere Schicht eingesetzte Polyamidmatrixpolymer (PAM). Hierdurch werden die benachbarten Schichten aus dem ersten Fasermaterial (F1) durch das Polyamidmatrixpolymer (PAM) imprägniert. Durch das vorstehend beschriebene exemplarische Verfahren wird als Kunststoffkomponente (K1) eine Sandwichstruktur erhalten, die den folgenden Schichtaufbau aufweist:

PAO, F1, PAM, F1 und PAO.

Beim Erwärmen und Verpressen bildet sich aus der Polyamidmatrixpolymer-(PAM)-Folie und den beiden Schichten aus dem ersten Fasermaterial (F1) formal die Matrixzusammensetzung (MZ).

Die als erste Kunststoffkomponente (K1) erhaltene Sandwichstruktur weist somit formal den folgenden Schichtaufbau auf: PAO, F1, PAM, F1 und PAO. Aus F1, PAM und F1 bildet sich hierbei formal die Matrixzusammensetzung (MZ). Die Matrixzusammensetzung besteht somit aus an beide Seiten imprägniertem Fasermaterial (F1) mit dem Polyamidmatrixpolymer (PAM) dazwischen. In Abhängigkeit des Grads der Erwärmung und des aufgewendeten Drucks können sich die beiden Matten aus erstem Fasermaterial (F1) in der ersten Kunststoffkomponente (K1) berühren.

Für den Fall, dass weitere Additive eingesetzt werden, werden diese im Allgemeinen ebenfalls durch übliche Mischvorrichtungen in dem jeweiligen Polyamidpolymer verteilt.

Die zweite Kunststoffkomponente (K2) kann ebenfalls ein Polyethylenimin (PEI) enthalten.

In der Matrixzusammensetzung (MZ) sind im Allgemeinen 0,01 bis 5 Gew.-% eines Polyethylenimins (PEI) enthalten, bezogen auf das Gesamtgewicht der Matrixzusammensetzung (MZ). Bevorzugt enthält die Matrixzusammensetzung (MZ) 0,1 bis 1 Gew.-% Polyethylenimin (PEI), bezogen auf das Gesamtgewicht der Matrixzusammensetzung (MZ).

Gegenstand der vorliegenden Erfindung ist somit auch ein Verfahren, bei dem die Matrixzusammensetzung (MZ) 0,01 bis 5 Gew.-% Polyethylenimin (PEI) enthält, bezogen auf das Gesamtgewicht der Matrixzusammensetzung (MZ).

In einer weiteren Ausführungsform sind im Compositkunststoffteil (CK) im Allgemeinen 0,01 bis 5 Gew.-% eines Polyethylenimins (PEI) enthalten, bezogen auf das Gesamtgewicht des Compositkunststoffteils (CK). Bevorzugt enthält das Compositkunststoffteil (CK) 0,1 bis 1 Gew.-% Polyethylenimin (PEI), bezogen auf das Gesamtgewicht des Compositkunststoffteils (CK).

*Polyethylenimin (PEI)*

Unter Polyethyleniminen (PEI) im Sinne der vorliegenden Erfindung werden sowohl Homo- als auch Copolymerisate verstanden, welche beispielsweise nach den Verfahren in Ullmann (Electronic Release) unter dem Stichwort "Aziridine" oder gemäß WO-A 94/12560 erhältlich sind.

Die Homopolymerisate sind im Allgemeinen durch Polymerisation von Ethylenimin (Aziridin) in wässriger oder organischer Lösung in Gegenwart von säureabspaltenden Verbindungen Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann im Allgemeinen mittels $^{13}$C-NMR Spektroskopie bestimmt werden. Diese beträgt vorzugsweise 1:0, 8:0,5 bis 1:1, 3:8, insbesondere 1:1, 1:0,8 bis 1:1.

Gegenstand der vorliegenden Erfindung ist somit auch ein Verfahren, bei dem das Polyethylenimin (PEI) primäre, sekundäre und tertiäre Aminogruppen enthält, wobei das Verhältnis von primären zu sekundären zu tertiären Aminogruppen im Bereich von 1 : 0,8 : 0,5 bis 1 : 1,3 : 0,8 liegt.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentriamin, Diehexamethylentriamin, Aminopropylethylendiamin und Bisaminopropylethylendiamin.

Polyethylenimin (PEI) weisen üblicherweise ein gewichtsmittleres Molekulargewicht (Gewichtmittel) $M_w$ von 600 bis 3 000 000, vorzugsweise 700 bis 2 000 000 auf. Das bevorzugte $M_w$ beträgt 800 bis 50 000, insbesondere von 1 100 bis 25 000. Das gewichtsmittlere Molekulargewicht wird bestimmt mittels Lichtstreuung gemäß gemäß ASTM D4001.

Gegenstand der vorliegenden Erfindung ist somit auch ein Verfahren, bei dem das Polyethylenimin (PEI) ein gewichtsmittleres Molekulargewicht $M_W$ im Bereich von 600 bis 300 000 g/mol hat.

Darüber hinaus eignen sich vernetzte Polyethylenimine (PEI), die durch Reaktion von Polyethyleniminen (PEI) mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiel seien Epichlorhydrin oder Bichlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen (PEI) sind unter anderem aus den oben genannten Schriften sowie EP-A 895 521 und EP-A 25 515 bekannt.

Weiterhin sind gepfropfte Polyethylenimine (PEI) geeignet, wobei als Pfropfmittel sämtliche Verbindungen eingesetzt werden können, die mit den Aminobeziehungsweise Iminogruppen der Polyethylenimine (PEI) reagieren können. Geeignete Pfropfmittel und Verfahren zur Herstellung von gepfropften Polyethylenimine (PEI) sind beispielsweise der EP-A 675 914 zu entnehmen.

Ebenso geeignete Polyethylenimine (PEI) im Sinne der Erfindung sind amidierte Polymerisate, die üblicherweise durch Umsetzung von Polyethyleniminen (PEI) mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine (PEI), die beispielsweise durch Umsetzung von Polyethylenimin (PEI) mit Ethylenoxid und/oder Propylenoxid erhältlich sind. Auch derartige alkolyxierte Polymerisate sind anschließend vernetzbar.

Als weitere geeignete erfindungsgemäße Polyethylenimine (PEI) seien hydroxylgruppenhaltige Polyethylenimine (PEI) und amphotere Polyethylenimine (PEI) (Einbau von anionischen Gruppen) genannt sowie lipophile Polyethylenimine (PEI), die in der Regel durch Einbau langkettiger Kohlenwasserstoffreste in die Polymerkette erhalten werden. Verfahren zur Herstellung derartiger Polyethylenimine (PEI) sind dem Fachmann bekannt.

Als Polyethylenimine (PEI) sind hyperverzweigte Polyethylenimine (PEI) bevorzugt. Das Merkmal "hyperverzweigt" bedeutet im Rahmen der vorliegenden Erfindung, dass der Verzweigungsgrad (DB) (degree of branching) des Polyethylenimins (PEI) im Bereich von 10 bis 99%, bevorzugt im Bereich von 50 bis 99 % und besonders bevorzugt im Bereich von 60 bis 99 % liegt. DB ist dabei definiert als

$$DB (\%) = 100 \times (T+Z)/(T+Z+L),$$

wobei T die mittlere Anzahl der terminalgebundenen Monomereinheiten, Z die mittlere Anzahl der Verzweigungen bildenden Monomereinheiten und L die mittlere Anzahl der lineargebundenen Monomereinheiten in dem Polyethylenimin (PEI) bedeuten.

Gegenstand der vorliegenden Erfindung ist somit auch ein Compositkunststofffteil (CK), das dadurch gekennzeichnet ist, dass das Polyethylenimin (PEI) ein hyperverzweigtes Polymer mit einem Verzweigungsgrad DB im Bereich von 10 bis 99 % ist, wobei DB definiert ist als DB (%) = 100 x (T + Z) / (T + Z + L), wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in dem Polyethylenimin (PEI) bedeuten.

## Zweite Kunststoffkomponente (K2)

Die zweite Kunststoffkomponente (K2) enthält ein Polyamidanformungspolymer (PAA). Unter dem Begriff "ein Polyamidanformungspolymer (PAA)" wird vorliegend sowohl genau ein PAA als auch Mischungen ans zwei oder mehreren PAA verstanden. Als ein Polyamidanformungspolymer (PAA) können im Allgemeinen die Polyamide eingesetzt werden, die auch als Polyamidmatrixpolymer (PAM) eingesetzt werden können. Für das Polyamidanformungspolymer (PAA) gelten somit die Ausführungen zum Polyamidmatrixpolymer (PAM) und die dort genannten Bevorzugungen entsprechend.

Als Polyamidanformungspolymer (PAA) kann das gleiche Polyamid wie für das Polyamidmatrixpolymer (PAM) verwendet werden. Es ist auch möglich für das Polyamidanformungspolymer (PAA) ein vom Polyamidmatrixpolymer (PAM) verschiedenes Polyamid einzusetzen.

Auch das Polyamidanformungspolymer (PAA) kann weitere übliche Additive enthalten wie vorstehend bei PAO und PAM beschrieben.

Das Polyamidanformungspolymer (PAA) kann ebenfalls ein Polyethylenimin (PEI) enthalten.

K2 kann das gleiche Polyethylenimin (PEI) wie die OZ enthalten. Es ist auch möglich, dass K2 ein von OZ verschiedenes Polyethylenimin (PEI) enthält. Für K2 gelten die Ausführungen und Bevorzugungen für das Polyethylenimin (PEI) wie sie vorstehend zur Oberflächenzusammensetzung (OZ) gemacht wurden entsprechend.

Das Polyethylenimin (PEI) wird bevorzugt ebenfalls in das Polyamidanformungspolymer (PAA) eingemischt. Hierfür können bekannte Mischvorrichtungen, wie beispielsweise Extruder, eingesetzt werden. Bevorzugt enthält die zweite Kunststoffkomponente (K2) ebenfalls ein Fasermaterial zur Verstärkung.

Gegenstand der vorliegenden Erfindung ist somit auch ein Verfahren, bei dem K2 ein zweites Fasermaterial (F2) enthält.

Als geeignete Materialien für dieses zweite Fasermaterial (F2) seien nur beispielhaft Kohlenstofffasern, Glasfasern, Aramidfasern, Kaliumtitanatfasern, Borfasern, mineralische Fasern (wie beispielsweise Basaltfasern) und metallische Fasern (wie beispielsweise Stahl- oder Kupferfasern) genannt.

Endlosfasern sind als zweites Fasermaterial (F2) nicht geeignet. Als zweites Fasermaterial (F2) sind Glasfasern (Kurzglasfasern) bevorzugt. Diese Glasfasern können beispielsweise mit einem Extruder in eine Polyamidschmelze eingemischt werden.

Gegenstand der vorliegenden Erfindung ist somit auch ein Verfahren, bei dem das zweite Fasermaterial (F2) ein Kurzfasermaterial ist.

Als zweites Fasermaterial (F2) werden bevorzugt Fasern eingesetzt, die sich mittels geeigneter Mischvorrichtungen in das Polyamidanformungspolymer (PAA) einmischen lassen. Die zweite Kunststoffkomponente (K2) kann gegebenenfalls noch weitere Additive enthalten. Als weitere Additive können dabei die vorstehend zu MZ beziehungsweise OZ genannten Additive eingesetzt werden.

## Verfahrensschritt b) Anformen der zweiten Kunststoffkomponente (K2)

Die erste Kunststoffkomponente (K1) wird im Allgemeinen in ein Formwerkzeug eingelegt. Hierbei ist es zum Beispiel möglich, die erste Kunststoffkomponente (K1) in einem vorgelagerten Schritt in einem ersten Werkzeug vorzuformen und den so hergestellten Vorformling nachfolgend in das Formwerkzeug einzulegen. Dies ist insbesondere dann möglich, wenn es sich bei der ersten Kunststoffkomponente (K1) um ein flächiges Kunststoffelement handelt.

Alternativ ist es auch möglich, die erste Kunststoffkomponente (K1) direkt in dem Formwerkzeug umzuformen. Bevorzugt ist es jedoch, die erste Kunststoffkomponente (K1) in einem ersten Werkzeug vorzuformen und den Vorformling nachfolgend in das Formwerkzeug einzulegen.

Weiterhin ist es möglich, die erste Kunststoffkomponente (K1) vor dem Einlegen in das Formwerkzeug zu erwärmen oder alternativ die erste Kunststoffkomponente (K1) in dem Formwerkzeug zu erwärmen. Insbesondere ist es bevorzugt die erste Kunststoffkomponente (K1) vorzuwärmen und die vorgewärmte erste Kunststoffkomponente (K1) in das Formwerkzeug einzulegen.

Bevorzugt weist das Formwerkzeug eine Temperatur im Bereich von 40 bis 210 °C, insbesondere im Bereich von 80 bis 120 °C, auf. Die erste Kunststoffkomponente (K1) wird vorzugsweise vor dem Einlegen in das Formwerkzeug auf eine Temperatur von 30 bis 190 °C, insbesondere im Bereich von 120 bis 170 °C erwärmt.

Nach dem Einlegen der erste Kunststoffkomponente (K1) wird die zweite Kunststoffkomponente (K2) in das Formwerkzeug eingebracht. Hierbei wird die zweite Kunststoffkomponente (K2) an die Oberfläche der erste Kunststoffkomponente (K1) angeformt. Dieses Anformen wird auch als "overmolding" bezeichnet. Im Rahmen der vorliegenden Erfindung wird unter "Anformen" das partielle Anformen der zweiten Kunststoffkomponente (K2) an Teile der erste Kunststoffkomponente (K1) verstanden. Darüber hinaus wird unter "Anformen" auch das vollständige oder teilweise Umschließen der ersten Kunststoffkomponente (K1) durch die zweite Kunststoffkomponente (K2) verstanden.

Beim Anformen kann die zweite Kunststoffkomponente (K2) entweder lokal an vorgegeben Positionen an die erste Kunststoffkomponente (K1) angeformt werden. Darüber hinaus ist es auch möglich, die erste Kunststoffkomponente (K1) vollständig oder teilweise mit der zweiten Kunststoffkomponente (K2) zu umschließen.

Beim Anformen ist es darüber hinaus möglich, zusätzliche Funktionselemente aus der zweiten Kunststoffkomponente (K2) auszubilden, die an der Oberfläche der erste Kunststoffkomponente (K1) angeformt sind.

Zum Anformen wird die zweite Kunststoffkomponente (K2), nach dem Fachmann bekannten Methoden, üblicherweise aufgeschmolzen und in das Formwerkzeug eingespritzt. Durch die Verwendung des vorstehend beschriebenen Polyethylenimins (PEI) wird eine verbesserte Adhäsion zwischen der erste Kunststoffkomponente (K1) und der zweiten Kunststoffkomponente (K2) im Compositkunststoffteil (CK) erzielt.

Gegenstand der vorliegenden Erfindung ist somit auch ein Verfahren, bei dem in Schritt b) K1 in ein Formwerkzeug eingelegt wird und K2 zum Anformen in geschmolzenem Zustand in das Formwerkzeug eingespritzt wird.

Das so hergestellte Compositkunststoffteil (CK) kann nachfolgend weiteren Bearbeitungsschritten unterzogen werden. Hierunter fallen beispielsweise weitere Umformungsschritte sowie Oberflächenbehandlungen des Compositkunststoffteils (CK), um dessen Oberfläche zu veredeln.

Um eine gute Verbindung zwischen der ersten Kunststoffkomponente (K1) und der zweiten Kunststoffkomponente (K2) zu erzielen, ist es vorteilhaft, wenn die Temperatur an der Oberfläche der erste Kunststoffkomponente (K1) oberhalb der Schmelztemperatur des Polyamidoberflächenpolymers (PAO) liegt. Hierzu wird die erste Kunststoffkomponente (K1) in der Regel erwärmt. Die Erwärmung der erste Kunststoffkomponente (K1) kann wie vorstehend ausgeführt, direkt im Formwerkzeug erfolgen. Alternativ kann die erste Kunststoffkomponente (K1) auch außerhalb des Formwerkzeugs erwärmt werden. Der Druck, mit dem die zweite Kunststoffkomponente (K2) in das Formwerkzeug eingebracht wird, ist von der Fließrichtung der Schmelze der zweiten Kunststoffkomponente (K2) abhängig. Hierzu werden dem Fachmann an sich bekannte Verfahren zum Spritzgießen sowie Fließpressen eingesetzt und die dort üblichen Drücke eingehalten.

**Patentansprüche**

1. Verfahren zur Herstellung eines Compositkunststoffteils (CK) umfassend die folgenden Schritte:

   a) Herstellung einer ersten Kunststoffkomponente (K1) umfassend die folgenden Schritte:

   ia) Imprägnieren eines ersten Fasermaterials (F1) mit einem Polyamidmatrixpolymer (PAM) unter Erhalt einer Matrixzusammensetzung (MZ) und
   ib) Aufbringen einer Oberflächenzusammensetzung (OZ), die ein Polyamidoberlächenpolymer (PAO) enthält, auf die Matrixzusammensetzung (MZ) unter Erhalt der ersten Kunststoffkomponente (K1), wobei die Oberflächenzusammensetzung (OZ) eine Oberfläche der ersten Kunststoffkomponente (K1) bildet,

   b) Anformen einer zweiten Kunststoffkomponente (K2), die ein Polyamidanformungspolymer (PAA) enthält, an die Oberfläche von (K1),
   wobei
   die Matrixzusammensetzung (MZ) ein Polyethylenimin (PEI) enthält.

2. Verfahren gemäß Anspruch 1, **dadurch gekennzeichnet, dass** das Polyethylenimin (PEI) ein gewichtsmittleres Molekulargewicht $M_W$ im Bereich von 600 bis 300 000 g/mol hat.

3. Verfahren gemäß Anspruch 1 oder 2, **dadurch gekennzeichnet, dass** das Polyethylenimin (PEI) primäre, sekundäre und tertiäre Aminogruppen enthält, wobei das Verhältnis von primären zu sekundären zu tertiären Aminogruppen im Bereich von 1 : 0,8 : 0,5 bis 1 : 1,3 : 0,8 liegt.

4. Verfahren gemäß einem der Ansprüche 1 bis 3, **dadurch gekennzeichnet, dass** das Polyethylenimin (PEI) ein hyperverzweigtes Polymer mit einem Verzweigungsgrad DB im Bereich von 10 bis 99 % ist, wobei DB definiert ist als DB (%) = 100 x (T + Z) / (T + Z + L), wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in dem Polyethylenimin (PEI) bedeuten.

5. Verfahren gemäß einem der Ansprüche 1 bis 4, **dadurch gekennzeichnet, dass** die Matrixzusammensetzung (MZ) 0,01 bis 5 Gew.-% Polyethylenimin (PEI) enthält, bezogen auf das Gesamtgewicht der Matrixzusammensetzung (MZ).

6. Verfahren gemäß einem der Ansprüche 1 bis 5, **dadurch gekennzeichnet, dass** das erste Fasermaterial (F1) ein Endlosfasermaterial ist

7. Verfahren gemäß einem der Ansprüche 1 bis 6, **dadurch gekennzeichnet, dass** K2 ein zweites Fasermaterial (F2) enthält.

8. Verfahren gemäß einem der Ansprüche 1 bis 7, **dadurch gekennzeichnet, dass** das zweite Fasermaterial (F2) ein Kurzfasermaterial ist.

9. Verfahren gemäß einem der Ansprüche 1 bis 8, **dadurch gekennzeichnet, dass** in Schritt b) K1 in ein Formwerkzeug eingelegt wird und K2 zum Anformen in geschmolzenem Zustand in das Formwerkzeug eingespritzt wird.

10. Verfahren gemäß einem der Ansprüche 1 bis 9, **dadurch gekennzeichnet, dass** das Polyamidmatrixpolymer (PAM) in Verfahrensschritt ia) auf Temperaturen im Bereich von 40 bis 210 °C erwärmt wird.

11. Verfahren gemäß einem der Ansprüche 1 bis 10, **dadurch gekennzeichnet, dass** das die Oberflächenzusammensetzung (OZ) in Verfahrensschritt ib) auf Temperaturen im Bereich von 40 bis 210 °C erwärmt wird.

12. Verfahren gemäß einem der Ansprüche 1 bis 11, **dadurch gekennzeichnet, dass** in Verfahrensschritt a) die Verfahrensschritte ia) und ib) gleichzeitig durchgeführt werden.

13. Verfahren gemäß einem der Ansprüche 1 bis 12, **dadurch gekennzeichnet, dass** nur die Matrixzusammensetzung (MZ) ein Polyethylenimin (PEI) enthält.

14. Compositkunststoffteil, erhältlich nach einem der Ansprüche 1 bis 13.

15. Verwendung von Polyethylenimin (PEI) zur Verbesserung der Imprägnierung eines ersten Fasermaterials (F1) mit einem Polyamidmatrixpolymer (PAM) in einem Verfahren zur Herstellung eines Compositkunststoffteils (CK), umfassend die folgenden Schritte:

    a) Herstellung einer ersten Kunststoffkomponente (K1) umfassend die folgenden Schritte:

        ia) Imprägnieren eines ersten Fasermaterials (F1) mit einem Polyamidmatrixpolymer (PAM) unter Erhalt einer Matrixzusammensetzung (MZ) und
        ib) Aufbringen einer Oberflächenzusammensetzung (OZ), die ein Polyamidoberlächenpolymer (PAO) enthält, auf die Matrixzusammensetzung (MZ) unter Erhalt der ersten Kunststoffkomponente (K1), wobei die Oberflächenzusammensetzung (OZ) eine Oberfläche der ersten Kunststoffkomponente (K1) bildet,

    b) Anformen einer zweiten Kunststoffkomponente (K2), die ein Polyamidanformungspolymer (PAA) enthält, an die Oberfläche von (K1),
    wobei
    die Matrixzusammensetzung (MZ) ein Polyethylenimin (PEI) enthält.

**Claims**

1. A process for producing a plastic composite component (CC), comprising the following steps:

    a) producing a first plastic component (C1), comprising the following steps:

        ia) impregnating a first fiber material (F1) with a polyamide matrix polymer (PAM) to obtain a matrix composition (MC) and
        ib) applying a surface composition (SC) comprising a polyamide surface polymer (PAS) to the matrix composition (MC) to obtain the first plastic component (C1), the surface composition (SC) forming a surface of the first plastic component (C1),

b) molding a second plastic component (C2) comprising a polyamide molding polymer (PAA) onto the surface of (C1),

wherein

the matrix composition (MC) comprises a polyethyleneimine (PEI).

2. The process according to claim 1, wherein the polyethyleneimine (PEI) has a weight-average molecular weight $M_W$ in the range from 600 to 300 000 g/mol.

3. The process according to claim 1 or 2, wherein the polyethyleneimine (PEI) comprises primary, secondary and tertiary amino groups, where the ratio of primary to secondary to tertiary amino groups is in the range from 1:0.8:0.5 to 1:1.3:0.8.

4. The process according to any of claims 1 to 3, wherein the polyethyleneimine (PEI) is a hyperbranched polymer having a degree of branching DB in the range from 10% to 99%, where DB is defined as DB (%) = 100 x (T + Z) / (T + Z + L) where T is the mean number of terminal-bonded monomer units, Z is the mean number of monomer units that form branches and L is the mean number of linear-bonded monomer units in the polyethyleneimine (PEI).

5. The process according to any of claims 1 to 4, wherein the matrix composition (MC) comprises 0.01% to 5% by weight of polyethyleneimine (PEI), based on the total weight of the matrix composition (MC).

6. The process according to any of claims 1 to 5, wherein the first fiber material (F1) is a continuous fiber material.

7. The process according to any of claims 1 to 6, wherein C2 comprises a second fiber material (F2).

8. The process according to any of claims 1 to 7, wherein the second fiber material (F2) is a short fiber material.

9. The process according to any of claims 1 to 8, wherein, in step b), C1 is placed into a mold and C2 is injected into the mold in the molten state for molding.

10. The process according to any of claims 1 to 9, wherein the polyamide matrix polymer (PAM) is heated in process step ia) to temperatures in the range from 40°C to 210°C.

11. The process according to any of claims 1 to 10, wherein the surface composition (SC) is heated in process step ib) to temperatures in the range from 40°C to 210°C.

12. The process according to any of claims 1 to 11, wherein process steps ia) and ib) are conducted simultaneously in process step a).

13. The process according to any of claims 1 to 12, wherein only the matrix composition (MC) comprises a polyethyleneimine (PEI).

14. A plastic composite component obtainable according to any of claims 1 to 13.

15. The use of polyethyleneimine (PEI) for improving the impregnation of a first fiber material (F1) with a polyamide matrix polymer (PAM) in a process for producing a plastic composite component (CC), comprising the following steps:

a) producing a first plastic component (C1), comprising the following steps:

ia) impregnating a first fiber material (F1) with a polyamide matrix polymer (PAM) to obtain a matrix composition (MC) and
ib) applying a surface composition (SC) comprising a polyamide surface polymer (PAS) to the matrix composition (MC) to obtain the first plastic component (C1), the surface composition (SC) forming a surface of the first plastic component (C1),

b) molding a second plastic component (C2) comprising a polyamide molding polymer (PAA) onto the surface of (C1),
where
the matrix composition (MC) comprises a polyethyleneimine (PEI).

**EP 3 036 276 B1**

**Revendications**

1. Procédé de fabrication d'une pièce en matière plastique composite (CK) comprenant les étapes suivantes :

    a) la fabrication d'un premier composant en matière plastique (K1), comprenant les étapes suivantes :

        ia) l'imprégnation d'un premier matériau fibreux (F1) avec un polymère de matrice de polyamide (PAM) pour obtenir une composition de matrice (MZ), et
        ib) l'application d'une composition de surface (OZ), qui contient un polymère de surface de polyamide (PAO), sur la composition de matrice (MZ) pour obtenir le première composant en matière plastique (K1), la composition de surface (OZ) formant une surface du premier composant en matière plastique (K1),

    b) le moulage d'un deuxième composant en matière plastique (K2), qui contient un polymère de moulage de polyamide (PAA), sur la surface de (K1),
    la composition de matrice (MZ) contenant une polyéthylène-imine (PEI).

2. Procédé selon la revendication 1, **caractérisé en ce que** la polyéthylène-imine (PEI) a un poids moléculaire moyen en poids $M_w$ dans la plage allant de 600 à 300 000 g/mol.

3. Procédé selon la revendication 1 ou 2, **caractérisé en ce que** la polyéthylène-imine (PEI) contient des groupes amino primaires, secondaires et tertiaires, le rapport entre les groupes amino primaires et secondaires et tertiaires se situant dans la plage allant de 1:0,8:0,5 à 1:1,3:0,8.

4. Procédé selon l'une quelconque des revendications 1 à 3, **caractérisé en ce que** la polyéthylène-imine (PEI) est un polymère hyper-ramifié ayant un degré de ramification DB dans la plage allant de 10 à 99 %, DB étant défini par DB (%) = 100 x (T+Z)/(T+Z+L), T signifiant le nombre moyen d'unités monomères reliées en position terminale, Z signifiant le nombre moyen d'unités monomères formant des ramifications et L signifiant le nombre moyen d'unités monomères reliées linéairement dans la polyéthylène-imine (PEI).

5. Procédé selon l'une quelconque des revendications 1 à 4, **caractérisé en ce que** la composition de matrice (MZ) contient 0,01 à 5 % en poids de polyéthylène-imine (PEI), par rapport au poids total de la composition de matrice (MZ).

6. Procédé selon l'une quelconque des revendications 1 à 5, **caractérisé en ce que** le premier matériau fibreux (F1) est un matériau à fibres sans fin.

7. Procédé selon l'une quelconque des revendications 1 à 6, **caractérisé en ce que** K2 contient un deuxième matériau fibreux (F2).

8. Procédé selon l'une quelconque des revendications 1 à 7, **caractérisé en ce que** le deuxième matériau fibreux (F2) est un matériau à fibres courtes.

9. Procédé selon l'une quelconque des revendications 1 à 8, **caractérisé en ce qu'**à l'étape b), K1 est disposé dans un outil de moulage et K2 est injecté dans l'outil de moulage pour le moulage à l'état fondu.

10. Procédé selon l'une quelconque des revendications 1 à 9, **caractérisé en ce que** le polymère de matrice de polyamide (PAM) est porté à des températures dans la plage allant de 40 à 210 °C à l'étape de procédé ia).

11. Procédé selon l'une quelconque des revendications 1 à 10, **caractérisé en ce que** la composition de surface (OZ) est portée à des températures dans la plage allant de 40 à 210 °C à l'étape de procédé ib).

12. Procédé selon l'une quelconque des revendications 1 à 11, **caractérisé en ce qu'**à l'étape de procédé a), les étapes de procédé ia) et ib) sont réalisées simultanément.

13. Procédé selon l'une quelconque des revendications 1 à 12, **caractérisé en ce que** seule la composition de matrice (MZ) contient une polyéthylène-imine (PEI).

14. Pièce en matière plastique composite, pouvant être obtenue selon l'une quelconque des revendications 1 à 13.

**15.** Utilisation de polyéthylène-imine (PEI) pour l'amélioration de l'imprégnation d'un premier matériau fibreux (F1) avec un polymère de matrice de polyamide (PAM) dans un procédé de fabrication d'une pièce en matière plastique composite (CK) comprenant les étapes suivantes :

a) la fabrication d'un premier composant en matière plastique (K1), comprenant les étapes suivantes :

ia) l'imprégnation d'un premier matériau fibreux (F1) avec un polymère de matrice de polyamide (PAM) pour obtenir une composition de matrice (MZ), et
ib) l'application d'une composition de surface (OZ), qui contient un polymère de surface de polyamide (PAO), sur la composition de matrice (MZ) pour obtenir le première composant en matière plastique (K1), la composition de surface (OZ) formant une surface du premier composant en matière plastique (K1),

b) le moulage d'un deuxième composant en matière plastique (K2), qui contient un polymère de moulage de polyamide (PAA), sur la surface de (K1),
la composition de matrice (MZ) contenant une polyéthylène-imine (PEI).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080176090 A1
- US 20080176090 A
- US 20120027983 A
- WO 2010076145 A
- WO 9412560 A
- DE 19931720 A
- US 4144123 A
- EP 895521 A
- EP 25515 A
- EP 675914 A

**In der Beschreibung aufgeführte Nicht-Patentliteratur**

- Schweißen und Umspritzen von Organoblechen. **MARCO WACKER.** KU-Kunststoffe. Karl Hanser Verlag, 2002
- **R. STOLZE.** *Kunststoffe,* 1988, vol. 78, 126-131
- **M. WACKER ; G.W. EHRENSTEIN ; C. OBERMANN.** *Kunststoffe,* 2002, vol. 92, 78-81